# EUROPÄISCHE PATENTSCHRIFT

(11) **EP 1 182 368 B1**
(45) Veröffentlichungstag und Bekanntmachung des Hinweises auf die Patenterteilung: **05.03.2008**
(21) Anmeldenummer: 01115874.8
(22) Anmeldetag: 29.06.2001
(51) Int. Cl.: F16B 37/04, F16B 7/18

(54) **Vorrichtung zum Befestigen von Haltekörpern**
Device for mounting fixing means
Dispositif de montage de pièces de fixation

(30) Priorität: 26.08.2000 DE 10042040
(43) Veröffentlichungstag der Anmeldung: 27.02.2002
(73) Patentinhaber: HYDAC Accessories GmbH, 66280 Sulzbach/Saar (DE)
(72) Erfinder: Quinot, Martin, Dipl.-Ing., 66386 Sankt Ingbert (DE); Kasubke, Volker, 66540 Neunkirchen (DE)
(74) Vertreter: Bartels & Partner

(56) Entgegenhaltungen:
- EP-A- 0 767 313
- EP-A- 0 841 492
- EP-A- 0 928 902
- US-A- 5 209 619

## Beschreibung

Die Erfindung betrifft eine Vorrichtung zum Befestigen von Haltekörpern, wie Schellenkörpern, an einer Tragschiene mit C-profilartigem Querschnitt, deren einander zugewandte beide Profilenden einen Längskanal der Tragschiene begrenzen und von mindestens einer von einem Befestigungsteil durchgriffenen Tragschienenmutter mit Flanken, die beim Befestigen zur Lasteinleitung in die Tragschiene dient, untergreifbar sind gemäß der Merkmalsausgestaltung des Oberbegriffes des Patentanspruches 1.

Neben einer Vielzahl von auf dem Markt frei erhältlichen Bau- und Ausführungsformen von Befestigungsvorrichtungen ist eine gattungsgemäße Befestigungsvorrichtung aus der EP-A-0 928 902 A1 bekannt. Die bekannte Vorrichtung dient dem Befestigen von Haltekörpern, wie Schellenkörpern, an einer Tragschiene mit C-profilartigem Querschnitt, deren einander zugewandten beiden Profilenden einen Längskanal der Tragschiene begrenzen und von mindestens einer von einem Befestigungsteil durchgriffenen Tragschienenmutter mit Flanken, die beim Befestigen zur Lasteinleitung in die Tragschiene dient, untergreifbar sind, wobei mindestens eine der Flanken der Tragschienenmutter mindestens einen Festlegesteg aufweist.

Solche Befestigungsvorrichtungen hintergreifen Profilenden einer Tragschiene mit C-profilartigem Querschnitt derart, daß sich eckig geformte Flankenstücke der Tragschienenmutter in flächiger Anlage mit den Profilenden befinden. Da Tragschienen in ganz unterschiedlichen Situationen, insbesondere auch senkrecht zum Boden verlaufend, eingesetzt werden, kann es passieren, daß bei der angesprochenen flächigen Anlage der Flankenstücke an den Profilenden derartige Vorrichtungen die gestiegenen Anforderungen an Handhabbarkeit und Haltekraft von Befestigungsvorrichtungen nicht immer in der gewünschten Weise erfüllen. Bei einer entlang des von der Tragschiene gebildeten Längskanals gerichteten Gewichtskraft kann es dabei neben einem Verschieben der Vorrichtung, im schlimmsten Fall zu einem Abrutschen der gesamten Vorrichtung in der Tragschiene kommen.

Durch die EP-A-0 841 492 ist ferner eine Verbindungseinrichtung bekannt mittels einzelner Verbindungselemente für die Herstellung einer festen, lösbaren und reproduzierbaren mechanischen Verbindung von zwei Profilenden untereinander. Die bekannte Lösung besteht im wesentlichen aus einer Nutleiste nebst einer gelochten Lasche und Schrauben, wobei die zu verbindenden Profile Montagenuten für die Aufnahme der Nutleisten aufweisen. Die gelochte Lasche weist an ihrer Unterseite von der Oberfläche vorstehende Eindringelemente auf, die als Festlegestege dienen und die sich beim Festziehen der Schrauben kaltverformend in das Material der zu verbindenden Profile einprägen und so eine mehrfache formschlüssige Verbindung von zwei Profilenden ergeben. Die Eindringelemente in der Art von Festlegestegen sind als sog. Raspelhiebe ausgebildet und erlauben eine linienförmige Lasteinleitung über den jeweiligen Festlegesteg, so dass insoweit gegenüber der vorstehend beschriebenen Lösung eine verbesserte Haltekraft erreicht ist; jedoch ist beim Festziehen der Schrauben aufgrund der gewünschten kaltverformenden Einprägung eine entsprechend große Anzugskraft notwendig, was einer gewünschten schnellen Montage entgegensteht.

Ausgehend von diesem Stand der Technik liegt daher der Erfindung die Aufgabe zugrunde, bekannte Befestigungsvorrichtungen dahingehend weiter zu verbessern, daß sie sich sehr einfach und mit verbesserter Haltekraft kostengünstig und schnell montieren lassen. Eine dahingehende Aufgabe löst eine Befestigungsvorrichtung mit den Merkmalen des Patentanspruches 1 in seiner Gesamtheit..

Dadurch, daß gemäß dem kennzeichnenden Teil des Patentanspruches 1 die Flanken der Tragschienenmutter mindestens zwei Arten von Festlegestegen mit unterschiedlicher Orientierung aufweisen und daß zumindest deren fiktive Verlängerungen einen vorgebbaren Festlegewinkel miteinander einschließen, können Tragschienenmuttern bei der Befestigung von Haltekörpern an Tragschienen einfach und schnell sowie mit erhöhter Haltekraft befestigt werden. Bei der Beaufschlagung der Befestigungsteile mit einem definierten Schraubenanzugsmoment ergibt sich dabei beginnend mit dem Endmontagezustand der Festlegestege eine materialabhänige Einpressung derselben in die Profilenden des Längskanals der Tragschiene. Neben einer sich darüber ergebenden Erhöhung der Haltekraft wird derart die Tragschienenmutter durch die sich ergebende Formschlußverbindung auch gegen ein Rückdrehen gesichert.

Bei einer weiteren bevorzugten Ausführungsform weist jede Flanke der Tragschienenmutter mindestens die beiden Arten der Festlegestege auf. Somit können in Abhängigkeit von den vorliegenden Gegebenheiten verschiedenste Anordnungen von Festlegestegen auf den den Profilenden zugewandten Grundflächen der Flanken vorgenommen und so die Vorrichtung auch an spezielle Bedürfnisse angepaßt werden.

Bei einer weiteren bevorzugten Ausführungsform der erfindungsgemäßen Vorrichtung bilden die Festlegestege zumindest teilweise mit dem Außenumfang der Flanken eine gemeinsame Abschlußfläche aus, die zumindest teilweise eine konvexe Krümmung aufweist. Damit können durch einfaches manuelles Zusammenschieben zweier vormontierter Tragschienenmuttern innerhalb der Tragschiene aus ihrer Vormontagestellung diese in eine Endmontagestellung gebracht werden, und zwar dadurch, daß sich die Tragschienenmuttern durch die aufgebrachte Zusammenschiebekraft entlang ihrer Konturen von selbst in die gewünschte Stellung verdrehen und dabei ein Abgleiten längs der Außenkontur oder Abschlußfläche erfolgt.

Bei einer weiteren bevorzugten Ausführungsform der erfindungsgemäßen Vorrichtung ist die Tragschienenmutter über mindestens ein einstückiges Klemmteil unverlierbar im Haltekörper gesichert, welches besonders bevorzugt als hülsenförmiges Schnapp- oder Klippteil mit der Tragschienenmutter verbindbar ist. Dieses an der Tragschiene festgelegte Klippteil füllt besonders bevorzugt mit mindestens einem Verformungsbereich einen Spalt zwischen der Tragschienenmutter und der Tragschiene derart aus, daß unmittelbar eine Klemmkraft auf die Tragschienenmutter ausgeübt ist. Dabei ist bevorzugt der jeweilige Verformungsbereich derart mit den Profilenden verrastbar, daß eine Art Druckknopfbetätigung für das Festlegen der Tragschienenmutter an der Tragschiene erreicht ist. Durch die Verbindung der Tragschienenmutter über das Klemmteil mit der Tragschiene ist also eine besonders einfache Montage der Muttern an der Tragschiene selbst möglich, wobei dabei schon in einem Vormontagezustand eine kraftschlüssige Verbindung zwischen dem Haltekörper und der Tragschiene erreicht wird. Hinsichtlich der Haltekraft des Haltekörpers wird bei der Endmontage darüber hinaus erreicht, daß zwischen den beiden einander zugewandten Flächen der Profilenden und der Tragschienenmutter über die Verformungsbereiche des Klemmteils eine formschlüssige Verbindung hergestellt wird, was die Haltekraft der Vorrichtung zusätzlich erheblich erhöht. Derart läßt sich also eine erfindungsgemäße Befestigungsvorrichtung einfach und schnell sowie mit erheblich erhöhter Haltekraft an Tragschienen einer vorgebbaren Variationsbreite an Größen definiert festlegen.

Weitere vorteilhafte Ausgestaltungen sind Gegenstand der Unteransprüche.

Im folgenden wird die erfindungsgemäße Vorrichtung anhand einer Ausführungsform nach den Zeichnungen näher erläutert. Es zeigen in prinzipieller und nicht maßstäblicher Darstellung die
- Fig.1: teilweise im Schnitt, teilweise in Ansicht die Tragschiene mit Tragschienenmutter im befestigten Zustand;
- Fig.2: teilweise im Schnitt, teilweise in Ansicht die Tragschiene mit Tragschienenmutter und an ihr befestigter Schellenhälfte des Haltekörpers in angezogenem Zustand des Befestigungsteils;
- Fig.3,4: die Draufsicht und in Blickrichtung entlang des Pfeiles Z die Seitenansicht der Tragschienenmutter nach den Fig.1 und 2 und
- Fig.5: eine Draufsicht auf jeweils eine Tragschiene mit benachbart zueinander angeordneten Tragschienenmuttern in einer Vorund Endmontagestellung.

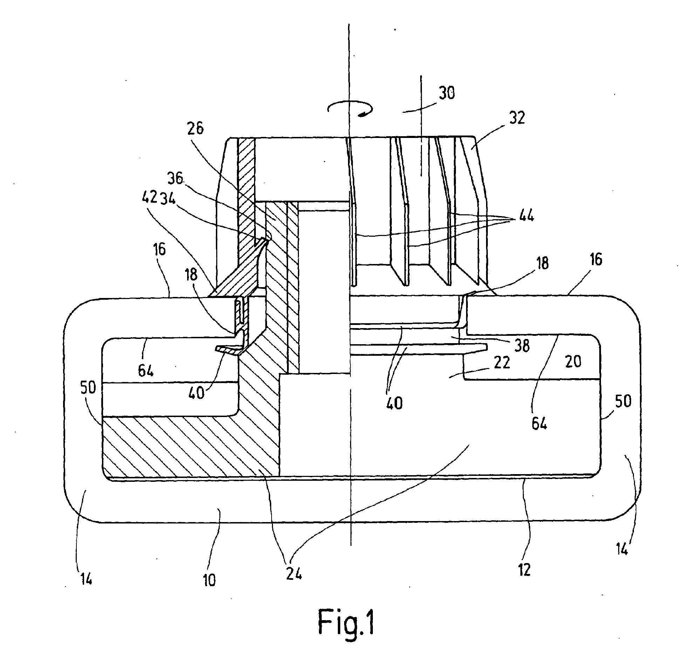

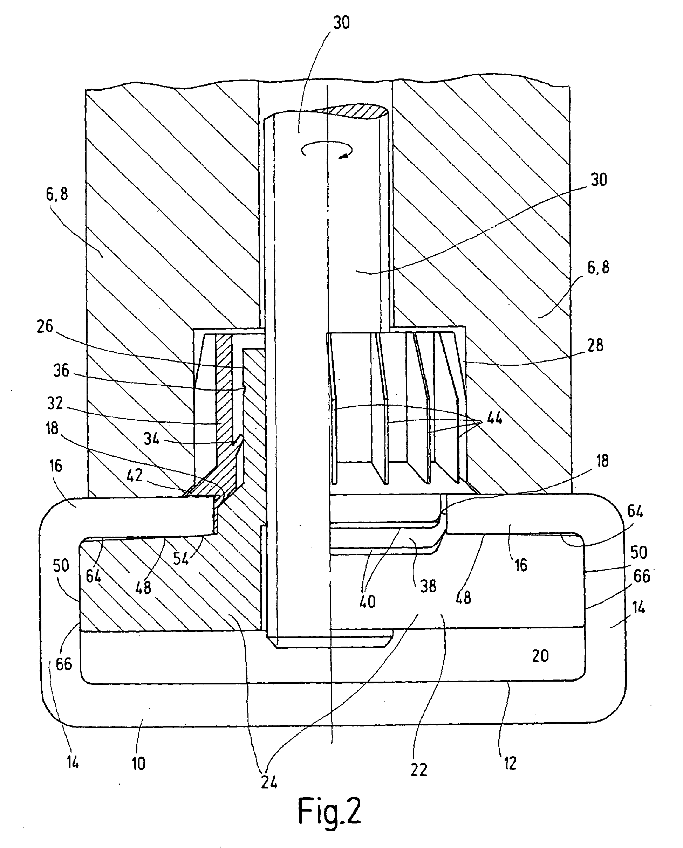

Die im folgenden vorgestellte erfindungsgemäße Vorrichtung dient dem Befestigen von Haltekörpern, insbesondere in Form von Schellenkörpern 6, von denen in der Fig.2 die untere Schellenhälfte 8 dargestellt ist. Ein von zwei Schellenhälften 8 begrenzter Aufnahmeraum (nicht dargestellt) dient dabei zur Aufnahme eines Rohres od. dgl. und dessen Festlegung in einer bestimmten Position. Eine dahingehende Festlegung soll insbesondere an Tragschienen 10 vorgenommen werden, wie insbesondere aus den Fig. 1, 2 und 4 ersichtlich wird. Die dort dargestellten Tragschienen 10 weisen ein C-profilartiges Querschnittsprofil auf. Von einem Schienenboden 12 stehen dabei mit diesem einstückig verbundene Längswände 14 ab, die wiederum in zu dem Schienenboden 12 parallel verlaufende Profilenden 16 übergehen, deren einander zugewandte Stirnflächen 18 einander gegenüberliegend parallel verlaufen, so daß derart insgesamt ein Längskanal 20 im Inneren der Tragschiene 10 begrenzt wird.

Eine sog. Tragschienenmutter 22 untergreift dabei nach dem Einfädeln in den Längskanal 20 und einem Verdrehen in eine Montagestellung mit ihren einander diametral gegenüberliegenden Flanken 24 die Profilenden 16 der Tragschiene 10 (vgl. Fig.1). Dabei greift das Kopfteil 26 der Tragschienenmutter 22 in eine Ausnehmung 28 des Haltekörpers ein, wie in Fig.2 dargestellt. Der Haltekörper und die Tragschienenmutter 22 werden beim Festlegen ihrerseits von einem Befestigungsteil 30 durchgriffen, welches in Form eines Schraubbolzens den gegebenenfalls mehrteiligen Haltekörper klemmend an der Tragschiene festlegt.

Zur Sicherung der Tragschienenmutter 22 im Haltekörper weist diese zusätzlich ein zylindrisches Klemmteil 32 auf, welches als hülsenförmiges Schnapp- oder Klippteil mit dem zylindrisch vorstehenden Kopfteil 26 der Tragschienenmutter 22 verbindbar ist. Dafür ist das Klemmteil 32 an seiner Innenseite mit einem Schnappring 34 versehen, der zum Eingriff in eine zumindest über einen Teil des Außenumfanges des Kopfteils 26 der Tragschienenmutter 22 verlaufenden Eingriffsnut 36 vorgesehen ist, wodurch das Klemmteil 32 an dem Kopfteil 26 rastend in Anlage bringbar ist (vgl.
Fig.1). Weiter weist das Klemmteil 32 an einer Verformungszone 38 an ihrem Außenumfang angeordnete Verformungsbereiche 40 in Form von Radiallippen auf. Diese sind derart auf der Verformungszone 38 angeordnet, daß beim Festlegen der Tragschienenmutter 22 an der Tragschiene 10 der den Flanken 24 zugewandte Verformungsbereich 40 die Profilenden untergreift, während die dem Kopfteil 26 zugewandte Radiallippe 40 zwischen der Tragschienenmutter 22 und den Stirnflächen 18 der Profilenden 16 eingeklemmt wird. Weiter sind an dem von der Tragschiene 10 hervorstehenden Abschnitt des Klemmteils 32 sich von einem auf den Profilenden abstützenden Randflansch 42 ausgehende, in Längsrichtung erstreckende Rändelstege 44 vorgesehen, die die Handhabung des Klemmteils 32 mit der Tragschienenmutter 22 dahingehend vereinfachen, als durch sie eine einfachere Handhabbarkeit, insbesondere beim Verdrehen der Tragschienenmutter in ihre Montagestellung, gewährleistet wird.

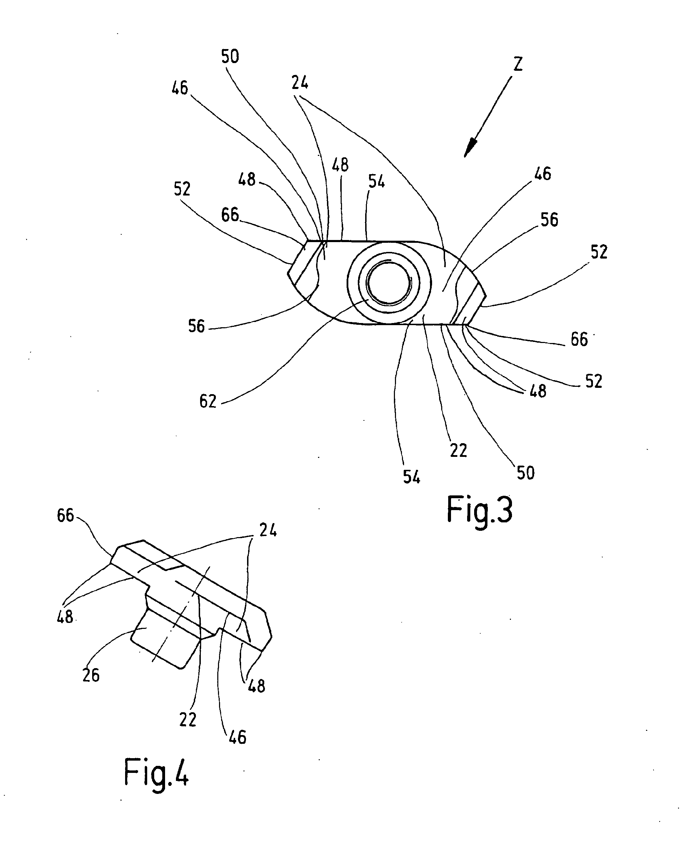

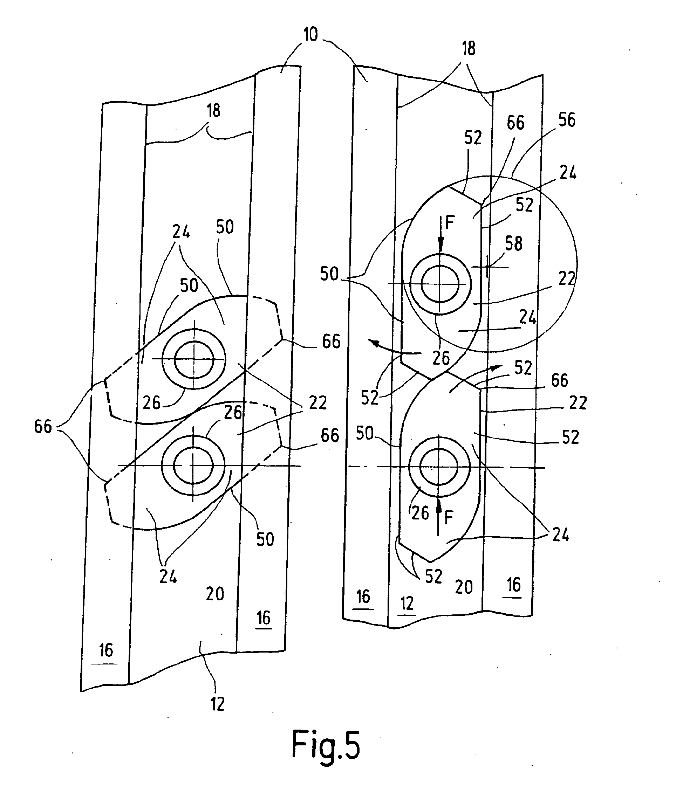

Aus den Fig. 3 bis 5 läßt sich weiter die Formgebung der Tragschienenmuttern gut erläutern. Ausgehend von einem Grundniveau erhebt sich die Grundfläche 46 der Tragschienenmutter 22 mit konvexer Krümmung in Richtung der Festlegestege 48, die mit dem Außenumfang 50 der Flanken 24 zumindest teilweise eine gemeinsame Abschlußfläche 52 ausbilden. An den dem Kopfteil 26 der Tragschienenmutter 22 zugewandten Enden von Festlegestegen 48 sind dabei Übergangsbereiche 54 ausgebildet. Der der Grundfläche 46 zugeordnete Abschnitt des Außenumfangs 50 verläuft dabei im wesentlichen entlang eines Kreisbogens 56, wie er in Fig.5 dargestellt ist, dessen Kreismittelpunkt 58 hier außerhalb der Form der Tragschienenmutter vorgesehen ist. Durch diese Geometrie wird es ermöglicht, daß nach dem Einfädeln mehrerer Tragschienenmuttern 22 auf eine Tragschiene 10 sich diese durch Zusammenschieben entlang ihrer Kreisbogenabschnitte 56 versuchen abzustoßen. Aus der Fig.5 ist dahingehend entnehmbar, daß die Tragschienenmuttern 22 beim Zusammenschieben derart von selbst aus einer Vor- in eine Endmontagestellung bringbar sind, was sich insbesondere bei kleinen Abständen von durch Tragschienenmuttern 22 dargestellten Befestigungspunkten als hilfreich darstellt. Die beschriebenen Tragschienenmuttern 22 sind in der vorliegenden Form vorzugsweise als Prägeteile einfach und kostengünstig herzustellen, wobei sich bei einer entsprechenden Beaufschlagung der Unterseite der Flanken eines Prägeteils die Festlegestege 48 am Außenumfang 50 aufstellen werden. Darüber hinaus wird deutlich, daß sich bei dieser Art von Befestigungsvorrichtungen das Zusammenfassen von Haltekörpern, Tragschienenmuttern 22 mit Klemmteilen 32 und Befestigungsteilen 30 zu einem Set und ein dahingehender Vertrieb als Verkaufseinheit anbietet.

Der übersichtlicheren Darstellung wegen wird im folgenden anhand der Zeichnungen nunmehr ein Festlegevorgang für die Befestigungsvorrichtung näher beschrieben.

Für den Festlegevorgang wird zunächst ein Klemmteil 32 unter Eingriff des Schnappringes 34 in die Eingriffsnut 36 auf dem Kopfteil 26 einer Tragschienenmutter 22 verklemmt. Eine zusätzliche, leicht handhabbare, tangentiale Krafteinleitung von ca. ¼ Umdrehung an den vorgesehenen Rändelstegen 44 des Klemmteils 32 bewirkt nach der Druckknopfbetätigung an der noch eingeklemmten Radiallippe 40 eine schraubenförmige Drehbewegung zur Innenseite 64 der Profilenden 16. Dadurch kann auch diese Radiallippe aus ihrem eingeklemmten Verformungsbereich eine mit den Profilenden 16 umgreifende Form- und Kraftschlußverbindung eingehen und zusammen mit der anderen Radiallippe die axiale Haltekraft der Tragschienenmutter 22 in Richtung Längskanal 20 bedeutend erhöhen. Mittels des Verrastens des Verformungsbereichs 40 mit den Profilenden 16 ist also eine Art Druckknopfbetätigung für das Festlegen der Tragschienenmutter erreicht und ein unbeabsichtigtes Entfernen der Tragschienenmutter 22 aus der Tragschiene 10 wird vermieden.

Zur Befestigung eines Haltekörpers an der Tragschiene 10 wird dieser derart auf der Tragschiene 10 angebracht, daß der über die Tragschiene hervorstehende Kopfteil 26 zusammen mit dem zugeordneten Abschnitt des Klemmteils 32 in die Ausnehmung 28 des Haltekörpers eingreift. Zur Festlegung an der Tragschiene 10 wird der Haltekörper von einem Befestigungsteil 30 in Form eines Schraubbolzens durchgriffen, der weiter mit seinem (nicht dargestellten) Außengewinde 60 in ein Innengewinde 62 des Kopfteils 26 der Tragschienenmutter 22 eingreift. Da das Klemmteil 32 über den Randflansch 42 auf den Profilenden 16 abgestützt wird, gerät bei einer Schraubbewegung des Befestigungsteils 30 zunächst der Schnappring 34 an der Innenseite des Klemmteils 32 außer Eingriff mit der Eingriffsnut 36 am Kopfteil 26 der Tragschienenmutter 22, da hierbei das Klemmteil 32 und das Kopfteil 26 in Längsrichtung gegeneinander verschoben werden. Diese Längsverschiebung dauert an, bis die Tragschienenmutter 22 mit den auf ihren Flanken 24 angeordneten Festlegestegen 48 an den Innenseiten 64 der Profilenden 16 anliegt. Durch die entsprechende Formgebung des Kopfteils 26 der Tragschienenmutter 22 wird erreicht, daß sich im laufe der Längsverschiebung der von den Stirnflächen 18 der Profilenden 16 eingefaßte Raum durch die Längsverschiebung stark verengt wird und es schließlich zur Klemmung von Verformungsbereichen 40 zwischen den Stirnflächen 18 der Profilenden 16 und der Tragschienenmutter 22 kommt. Gleichzeitig befinden sich dann Längsstege 66 des Außenumfangs 50 der Tragschienenmutter 22 mit den Längswänden 14 der Tragschiene 10 in Anlage, was zu einer insgesamt linienförmigen Lasteinleitung der Haltekraft in die Tragschiene 10 führt. An den Festlegestegen 48 und dem Übergangsbereich 54 kommt es bei einem Festziehen des Befestigungsteils zu einer Einpressung, die zusätzlich die Haltekraft erhöht und eine Sicherung gegen das Rückdrehen der Tragschienenmutter 22 darstellt. Weiter wird durch die Einklemmung der aus Radiallippen gebildeten Verformungsbereiche 40 zwischen der Tragschienenmutter 22 und den Profilenden 16 ein formschlüssiger Verbund erreicht, der zusätzlich die Haltekraft erhöht.

Mit der erfindungsgemäßen Befestigungsvorrichtung ist mithin eine einfache, schnelle, sichere und haltbare Montage von Haltekörpern etwa aus einem Elastomermaterial möglich, die beispielsweise in einer nicht dargestellten Ausführungsform mit einem Betätigungsteil des Befestigungsteils 30 von einer Anlageplatte begrenzt sein können. In Form eines aus mindestens einem Haltekörper, zwei Tragschienenmuttern 22 mit Klemmteilen 32 und zwei Befestigungsteilen 30 bestehenden Set ist so eine günstige Befestigungsvorrichtung für Haltekörper, wie Schellenkörper 6, geschaffen.

## Patentansprüche

1. Vorrichtung zum Befestigen von Haltekörpern, wie Schellenkörpern (6), an einer Tragschiene (10) mit C-profilartigem Querschnitt, deren einander zugewandte beide Profilenden (16) einen Längskanal (20) der Tragschiene (10) begrenzen und von mindestens einer von einem Befestigungsteil (30) durchgriffenen Tragschienenmutter (22) mit Flanken (24), die beim Befestigen zur Lasteinleitung in die Tragschiene (10) dient, untergreifbar sind, wobei mindestens eine der Flanken (24) der Tragschienenmutter (22) mindestens einen Festlegesteg (48) aufweist, und wobei die Lasteinleitung über den jeweiligen Festlegesteg (48) linienförmig erfolgt, **dadurch gekennzeichnet, daß** die Flanken (24) der Tragschienenmutter (22) mindestens zwei Arten von Festlegestegen (48) mit unterschiedlicher Orientierung aufweisen und daß zumindest deren fiktive Verlängerungen einen vorgebbaren Festlegewinkel miteinander einschließen.

2. Vorrichtung nach Anspruch 1, **dadurch gekennzeichnet, daß** jede Flanke (24) mindestens die beiden Arten von Festlegestegen (48) aufweist.

3. Vorrichtung nach Anspruch 1 oder 2, **dadurch gekennzeichnet, daß** die Festlegestege (48) auf den den Profilenden (16) zugewandten Grundflächen (46) der Flanken (24) vorstehend angeordnet sind.

4. Vorrichtung nach einem der Ansprüche 1 bis 3, **dadurch gekennzeichnet, daß** die Festlegestege (48) zumindest teilweise mit dem Außenfang (50) der Flanken (24) eine gemeinsame Abschlußfläche (52) ausbilden, die zumindest teilweise eine konvexe Krümmung aufweist.

5. Vorrichtung nach einem der Ansprüche 1 bis 4, **dadurch gekennzeichnet, daß** die Flanken (24) der Tragschienenmutter (22) einander diametral gegenüberliegend angeordnet sind.

6. Vorrichtung nach einem der Ansprüche 1 bis 5, **dadurch gekennzeichnet, daß** der Außenumfang (50) der Flanken (24) zumindest teilweise entlang eines Kreisbogens (56) verläuft.

7. Vorrichtung nach einem der Ansprüche 1 bis 6, **dadurch gekennzeichnet, daß** die Tragschienenmutter (22) über ein mindestens einstückiges Klemmteil (32) unverlierbar im Haltekörper gesichert ist.

8. Vorrichtung nach Anspruch 7, **dadurch gekennzeichnet, daß** das Klemmteil (32) als hülsenförmiges Schnapp- oder Klippteil mit der Tragschienenmutter (22) verbindbar ist.

9. Vorrichtung nach Anspruch 7 oder 8, **dadurch gekennzeichnet, daß** das an der Tragschiene (10) festgelegte Klemmteil (32) mit mindestens einem Verformungsbereich (40) einen Spalt zwischen der Tragschienenmutter (22) und der Tragschiene (10) derart ausfüllt, daß unmittelbar eine Klemmkraft auf die Tragschienenmutter (22) ausgeübt ist.

10. Vorrichtung nach Anspruch 9, **dadurch gekennzeichnet, daß** der jeweilige Verformungsbereich (40) derart mit den Profilenden (16) verrastbar ist, daß eine Art Druckknopfbetätigung für das Festlegen der Tragschienenmutter (22) an der Tragschiene (10) erreicht ist.

11. Vorrichtung nach Anspruch 9 oder 10, **dadurch gekennzeichnet, daß** zwei Verformungsbereiche (40) am Klemmteil (32) vorhanden sind und daß mindestens einer der beiden Verformungsbereiche (40) die einander zugewandten Profilenden (16) im festgelegten Zustand des Klemmteils (32) untergreift.

12. Vorrichtung nach einem der Ansprüche 9 bis 11, **dadurch gekennzeichnet, daß** das Klemmteil (32) für den Eingriff mit dem Haltekörper und für seine Befestigung an der Tragschiene (10) mit einer Handhabe, insbesondere mit in Längsrichtung verlaufenden Rändelstegen (44), versehen ist.

13. Vorrichtung nach Anspruch 12, **dadurch gekennzeichnet, daß** als Schnapp- oder Klippteil für das Klemmteil (32) ein Schnappring (34) vorgesehen ist, der vor dem Einführen der Tragschienenmutter (22) mit dem Klemmteil (32) in die Tragschiene (10) in eine zugeordnete Eingriffsnut (36) an einem buchsenartigen Fortsatz der Tragschienenmutter (22) eingreift, auf der das Klemmteil (32) angeordnet ist, und der nach dem klemmenden Festlegen der Tragschienenmutter (22) an der Tragschiene (10) außer Eingriff mit der Eingriffsnut (36) gelangt bei gleichzeitiger Längsverschiebung des buchsenartigen Klemmteils (32) entlang des buchsenartigen Fortsatzes.

14. Vorrichtung nach einem der Ansprüche 1 bis 13, **dadurch gekennzeichnet, daß** der Haltekörper aus zwei Schellenhälften (8) gebildet ist, die zwischen sich einen Aufnahmeraum für ein aufzunehmendes Teil begrenzen insbesondere in Form eines Rohres oder einer Leitung und daß die jeweilige Schellenhälfte (8) von dem Befestigungsteil (30) in Form einer Befestigungsschraube durchgriffen ist, die mit ihrem jeweiligen freien Ende in die Tragschienenmutter (22) eingreift.

15. Vorrichtung nach Anspruch 14, **dadurch gekennzeichnet, daß** diese ein Set ausbildet bestehend aus mindestens einem Haltekörper, einer Tragschienenmutter (22) mit Klemmteil (32) und einer Befestigungsschraube.

16. Vorrichtung nach Anspruch 14 oder 15, **dadurch gekennzeichnet, daß** der Haltekörper aus einem Elastomermaterial gebildet ist, das für eine Anlage mit einem Betätigungsteil des Befestigungsteils (30) von einer Anlageplatte begrenzt ist.

## Claims

1. Device for fitting holding bodies such as shell bodies (6) to a support rail (10) with a C-shaped profile cross-section, the two facing profile ends (16) of which delimit a longitudinal channel (20) of the support rail (10) and can be engaged by at least one support rail nut (22) with flanks (24) penetrated by a fitting part (30), which serve for a load induction into the support rail (10) during the fitting process, whereby at least one of the flanks (24) of the support rail nuts (22) comprises at least one fitting bridge (48), and whereby the load induction is realised via the relevant fitting bridge (48) in a line-shaped way, **characterised in that** the flanks (24) of the support rail nut (22) comprise at least two types of fitting bridges (48) with different orientations, and **in that** at least their fictitious extensions enclose a pre-determinable fitting angle between themselves.

2. Device according to Claim 1, **characterised in that** each flank (24) comprises at least the two types of fitting bridges (48).

3. Device according to Claim 1 or 2, **characterised in that** the fitting bridges (48) are positioned on the base surfaces (46) of the flanks (24) facing the profile ends (16) and project further than the same.

4. Device according to one of the Claims 1 to 3, **characterised in that** the fitting bridges (48) form a common closing surface (52) with the outer circumference (50) of the flanks (24) at least in part, the same comprising a convex arc at least in part.

5. Device according to one of the Claims 1 to 4, **characterised in that** the flanks (24) of the support rail nut (22) are positioned diametrically opposite each other.

6. Device according to one of the Claims 1 to 5, **characterised in that** the outer circumference (50) of the flanks (24) extends along a circular arc (56) at least in part.

7. Device according to one of the Claims 1 to 6, **characterised in that** the support rail nut (22) is secured against loss within the holding body by means of at least one single piece clamping part (32).

8. Device according to Claim 7, **characterised in that** the clamping part (32) can be connected with the support rail nut (22) in the form of a sleeve-shaped snap-in or clip-on part.

9. Device according to Claim 7 or 8, **characterised in that** the clamping part (32) affixed to the support rail (10) fills a gap between the support rail nut (22) and the support rail (10) with at least one deformation area (40) in such a way that a clamping force is applied directly to the support rail nut (22).

10. Device according to Claim 9, **characterised in that** the relevant deformation area (40) can be arrested with the profile ends (16) in such a way that a kind of press stud activation for fitting the support rail nut (22) to the support rail (10) is realised.

11. Device according to Claim 9 or 10, **characterised in that** two deformation areas (40) are provided on the clamping part (32), and **in that** at least one of the two deformation areas (40) engages the facing profile ends (16) in the fitted condition of the clamping part (32).

12. Device according to one of the Claims 9 to 11, **characterised in that** the clamping part (32) for engaging the holding body and for fitting to the support rail (10) is equipped with a hand grip, in particular with crimped bridges (44) extending in a longitudinal direction.

13. Device according to Claim 12, **characterised in that** a snap ring (34) is envisaged as a snap-in or clip-on part for the clamping part (32), the same engaging an associated engaging groove (36) in a bushing-like extension of the support rail nut (22) prior to inserting the support rail nut (22) with the clamping part (32) into the support rail (10), on which the clamping part (32) is located, and which is disengaged from the engaging groove (36) to following the clamping affixing of the support rail nut (22) to the support rail (10) whilst simultaneously longitudinally displacing the bushing-like clamping part (32) along the bushing-like extension.

14. Device according to one of the Claims 1 to 13, **characterised in that** the holding body consists of two shell halves (8) delimiting a receiving chamber for a part to be received between themselves, in particular in the form of a pipe or a line, and **in that** the relevant shell half (8) is penetrated by the fitting part (30) in the form of a fitting screw, which engages the support rail nut (22) with its relevant free end.

15. Device according to Claim 14, **characterised in that** the same forms a set comprising of at least one holding body, a support rail nut (22) with a clamping part (32), and a fitting screw.

16. Device according to Claim 14 or 15, **characterised in that** the holding body consists of an elastomer material delimited by an abutment plate for abutment against an activating part of the fitting part (30).

## Revendications

1. Dispositif de fixation de pièces de maintien, comme des pièces (6) formant collier, sur un rail (10) porteur ayant une section transversale profilée en C dont les deux extrémités (16) de profilé tournées l'une vers l'autre délimitent un canal (20) longitudinal du rail (10) porteur et peuvent être accrochées par en dessous par au moins un écrou (22) de rail porteur traversé par une pièce (30) de fixation et ayant des flancs (24) qui servent, lors de la fixation, à l'application d'une charge au rail (10) porteur, au moins l'un des flancs (24) de l'écrou (22) de rail porteur ayant au moins une barrette (48) de fixation, et dans lequel l'application de la charge s'effectue linéairement par la barrette (48) de fixation respective, **caractérisé en ce que** les flancs (24) de l'écrou (22) de rail porteur ont au moins deux types de barrettes (48) de fixation ayant une orientation différente, et **en ce qu'**au moins leurs prolongements fictifs font entre eux un angle de fixation pouvant être prescrit.

2. Dispositif suivant la revendication 1,
**caractérisé en ce que** chaque flanc (24) a au moins les deux types de barrettes (48) de fixation.

3. Dispositif suivant la revendication 1 ou 2, **caractérisé en ce que** les barrettes (48) de fixation sont disposées en saillie sur les surfaces (46) de base des flancs, qui sont tournées vers les extrémités (16) du profilé.

4. Dispositif suivant l'une des revendications 1 à 3, **caractérisé en ce que** les barrettes (48) de fixation forment une surface (52) commune de fermeture, au moins en partie avec le pourtour (50) extérieur des flancs (24), surface qui a, au moins en partie, une courbure convexe.

5. Dispositif suivant l'une des revendications 1 à 4, **caractérisé en ce que** les flancs (24) de l'écrou (22) de rail porteur sont disposés de façon diamétralement opposée l'un à l'autre.

6. Dispositif suivant l'une des revendications 1 à 5, **caractérisé en ce que** le pourtour (50) extérieur des flancs (24) s'étend au moins en partie le long d'un arc (56) de cercle.

7. Dispositif suivant l'une des revendications 1 à 6, **caractérisé en ce que** l'écrou (22) de rail porteur est assujetti de manière imperdable dans la pièce de maintien au moyen d'au moins une pièce (32) de serrage d'un seul tenant.

8. Dispositif suivant la revendication 7, **caractérisé en ce que** la pièce (32) de serrage peut être reliée, sous la forme d'une pièce à encliquetage ou à clipsage en forme de douille, à l'écrou (22) de rail porteur.

9. Dispositif suivant la revendication 7 ou 8, **caractérisé en ce que** la pièce (32) de serrage fixée au rail (10) porteur remplit, par au moins une zone (40) de déformation, un intervalle compris entre l'écrou (22) de rail porteur et le rail (10) porteur, de façon à appliquer directement une force de serrage à l'écrou (22) de rail porteur.

10. Dispositif suivant la revendication 9, **caractérisé en ce que** la zone (40) de déformation respective peut être encliquetée avec les extrémités (16) du profil, de façon à obtenir une sorte d'actionnement à bouton poussoir pour la fixation de l'écrou (22) de rail porteur au rail (10) porteur.

11. Dispositif suivant la revendication 9 ou 10, **caractérisé en ce qu'**il est prévu deux zones (40) de déformation sur la pièce (32) de serrage, et **en ce qu'**au moins l'une des deux zones (40) de déformation s'accroche, lorsque la pièce (32) de serrage est à l'état fixé, aux extrémités (16) du profilé tournées l'une vers l'autre.

12. Dispositif suivant l'une des revendications 9 à 11, **caractérisé en ce que** la pièce (32) de serrage est munie, pour la prise avec la pièce de maintien et pour sa fixation au rail (10) support, d'une poignée, notamment d'une barrette (44) moletée s'étendant dans la direction longitudinale.

13. Dispositif suivant la revendication 12, **caractérisé en ce qu'**il est prévu, comme pièce d'encliquetage ou de clipsage de la pièce (32) de serrage, un ressort (34) d'encliquetage pour pénétrer, avant l'introduction de l'écrou (22) de rail porteur avec la pièce (32) de serrage dans le rail (10) porteur, dans une rainure (36) associée sur un prolongement en forme de douille de l'écrou (22) de rail porteur sur lequel est disposée la pièce (32) de serrage, et ressort qui, après le serrage de l'écrou (22) de rail porteur sur le rail (10) porteur, vient hors de prise avec la rainure (36), avec déplacement longitudinal simultané de la pièce (32) de serrage en forme de douille le long du prolongement en forme de douille.

14. Dispositif suivant l'une des revendications 1 à 13, **caractérisé en ce que** la pièce de maintien est formée de deux moitiés (8) de collier, qui délimitent entre elles un espace de réception d'une pièce à recevoir, notamment sous la forme d'un tube ou d'un conduit, et **en ce que** les moitiés (8) respectives de collier sont traversées par la pièce (30) de fixation sous la forme d'une vis de fixation, qui pénètre par son extrémité libre respective dans l'écrou (22) de rail porteur.

15. Dispositif suivant la revendication 14, **caractérisé en ce qu'**il constitue un jeu constitué d'au moins une pièce de maintien, d'un écrou (22) de rail porteur, ayant la pièce (32) de serrage et d'une vis de fixation.

16. Dispositif suivant la revendication 14 ou 15, **caractérisé en ce que** la pièce de maintien est en un matériau élastomère qui est délimité, pour un contact avec une pièce d'actionnement de la pièce (30) de fixation, par une plaque de contact.
